Europäisches Patentamt

European Patent Office

Office européen des brevets

(11) Publication number: **0 005 498**

A1

## (12) EUROPEAN PATENT APPLICATION

(21) Application number: **79101390.7**

(22) Date of filing: **08.05.79**

(51) Int. Cl.²: **B 65 G 19/20**

(30) Priority: **15.05.78 IT 4007478**
**30.11.78 IT 4014778**
**27.04.79 IT 4887279**

(43) Date of publication of application:
**28.11.79 Bulletin 79/24**

(84) Designated Contracting States:
**BE CH DE FR GB IT NL**

(71) Applicant: **Lusetti, Sergio**
**Via Matilde di Canossa, 17**
**I-41100 Modena(IT)**

(72) Inventor: **Lusetti, Sergio**
**Via Matilde di Canossa, 17**
**I-41100 Modena(IT)**

(74) Representative: **Gardi, Giuliano**
**Palazzo Prora Via Giardini, 605**
**I-41100 Modena(IT)**

(54) Sectional conveyor chain for granulated and/or powdered materials, particularly for fodders.

(57) Composable chain for conveyors of granular and or powdered materials, especially animal feed, gliding in a tube (13), consisting of filiform metallic elements interchangeable among each other, interconnected with spacial articulation for the forced insertion, comprising a stem (1), equipped with one bent edge (31) with consecutive connexion (32) to form one or more than one coils (30) arranged in one or more than one transversal planes compared to the axis of the stem itself in order to form a conveyor and or scraper element of the material (16): the end opposite from the stem (1) being equipped with a grommet or a crook (20, 21, 22) for the coupling to the bend (31) of the adjacent chain element; the inner area of the coil (30) can be partially or totally closed by one or more than one turn of the spiral or by a concave plastic diaphragm in the sense of the motion.

EP 0 005 498 A1

Fig.14

Fig.16

- 1 -

Sectional conveyor chain for granulated and/or powdered
materials, particularly for fodders

The invention concerns a composable chain for conveyors
of granular and/or powdered materials, especially animal
feed, that is to say a chain consisting of interchangeable
filiform metallic elements of constant section and constant
step; interconnected among each other by spacial joints
with forced insertion of each element into the adjacent
one. The chain is pulled in a gliding way, with or without
slack, at the inside of a straight or not straight tube,
but in any case oriented in the space. The shape of the
chain elements is suitable to provoke the entrainment of
the material to be conveyed, when the chain is pulled at
the inside of the conveyor tube; the material to be conveyed may be at the state of middling, even ground or at
the state of flour, moist or sticky or slippery.
The prior state of art comprises tubular cylindric conveyors, at the inside of which the entrainment of the material to be conveyed is obtained by causing a metallic con
tinuous cable or chain with not interchangeable links, equipped with a series of blind plastic disks, to slide at
the inside of the conveyor tube; these disks are arranged
at constant step intervals in a plane that is perpendicular to the cable or to the link chain. The above said disks
have a smaller diameter than that of the inside of the con
veyor tube in order to avoid excessive flood of material
in the single sections comprised between two of the above
said disks, allowing part of it to pass between the periphe
ral edge of the disks, and the inner surface of the tube
and particularly above the upper sector of the disk edge,
as the various disks lean on a small angular sector of the
inner surface or wall of the tube due to gravity in the sec
tions that are not vertical. In the above said conveyor ty
pes frequently there are deposits formed in case of carrying moist or sticky materials, and these deposits may deter
mine the irregular operation or also the stopping of the
conveyor with, moreover, a possibility of breakage of the
disks, which are fastened by means of hubs or shaped, during the construction phase, directly on the cable or on the pull chain. In case of breakage of the plastic disks, the cable, or the pull chain, it is necessary to extract the cable or the chain completely from the conveyor tube in order to repair it, which generally requires the intervention of skilled technicians.

This prior state of art is susceptible of further improvements concerning the possibility of repairs without being compelled to extract the cable or the chain completely from the conveyor tube in case of their breakage; concerning the possibility to avoid the forming of deposits at the inside of the tube of such a volume that they determine obstructions and resistance to movement, thus provoking damage of the plastic disks or even breakage of the cable or pull chain; concerning the possibility to obtain an inexpensive, sturdy conveyor of simple construction, which may be used to convey granular, powdered, moist or dry, sticky or slippery materials even in tubes with large diameters for great rates of flow.

From the aforesaid results the necessity of resolving the technical problem of finding an economical pulling device with a composable chain, the elements of which can easily and quickly be replaced on site, without any necessity of intervention of a skilled technician; such a pulling device having to be suitable to clean the inner surface of the tube from deposits; this chain having to be composed of interchangeable elements with spacial joints so that they can overcome bends of the tube even with a very small radius and up to a right angle; moreover such a pulling device has to be sturdy, light, movable in both directions, of simple and economical construction and suitable for use in conveyor tubes of large diameter for great rates of flow such as those used in factories and harbours for the quick loading and unloading of great rates of flow of powdered materials in dry, moist, sticky or slippery state even over vertical distances.

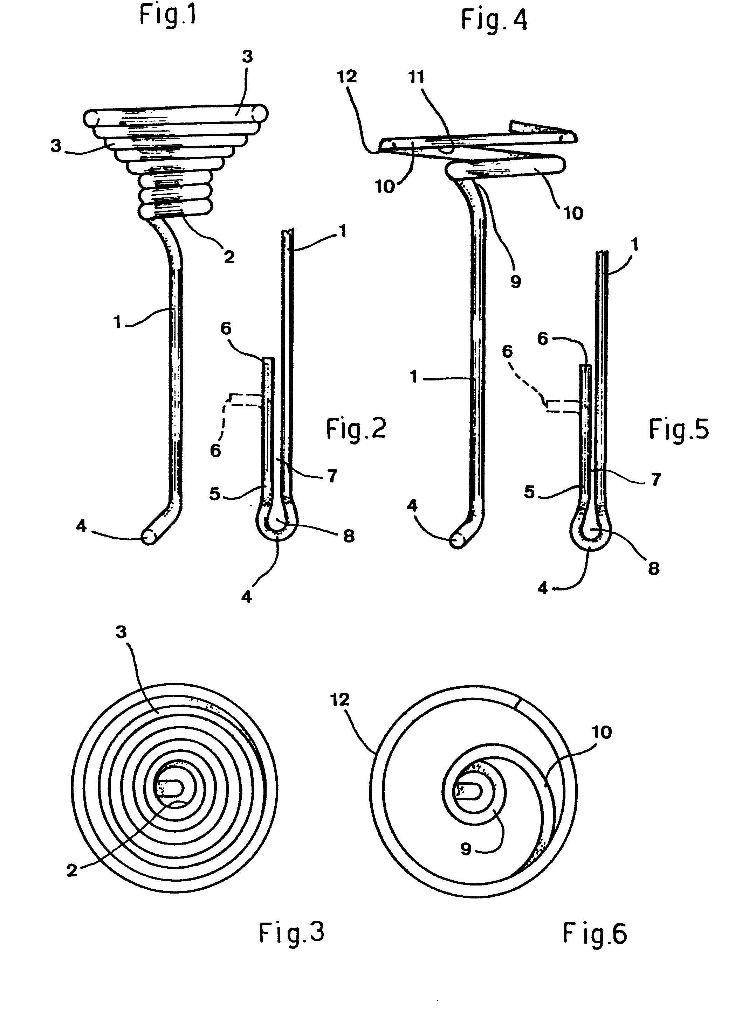

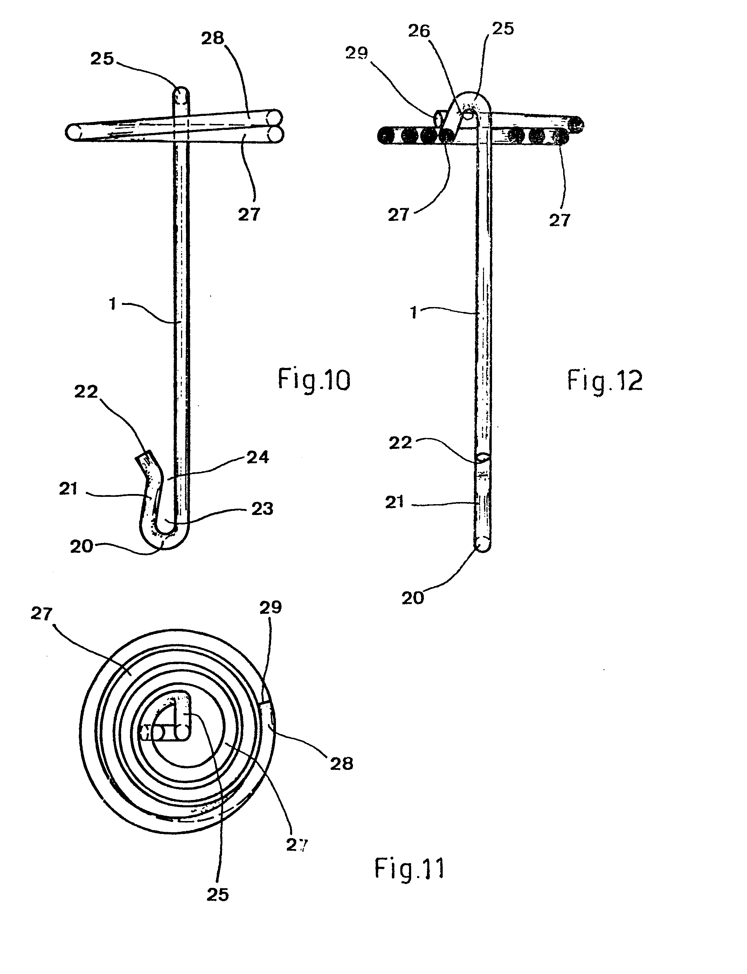

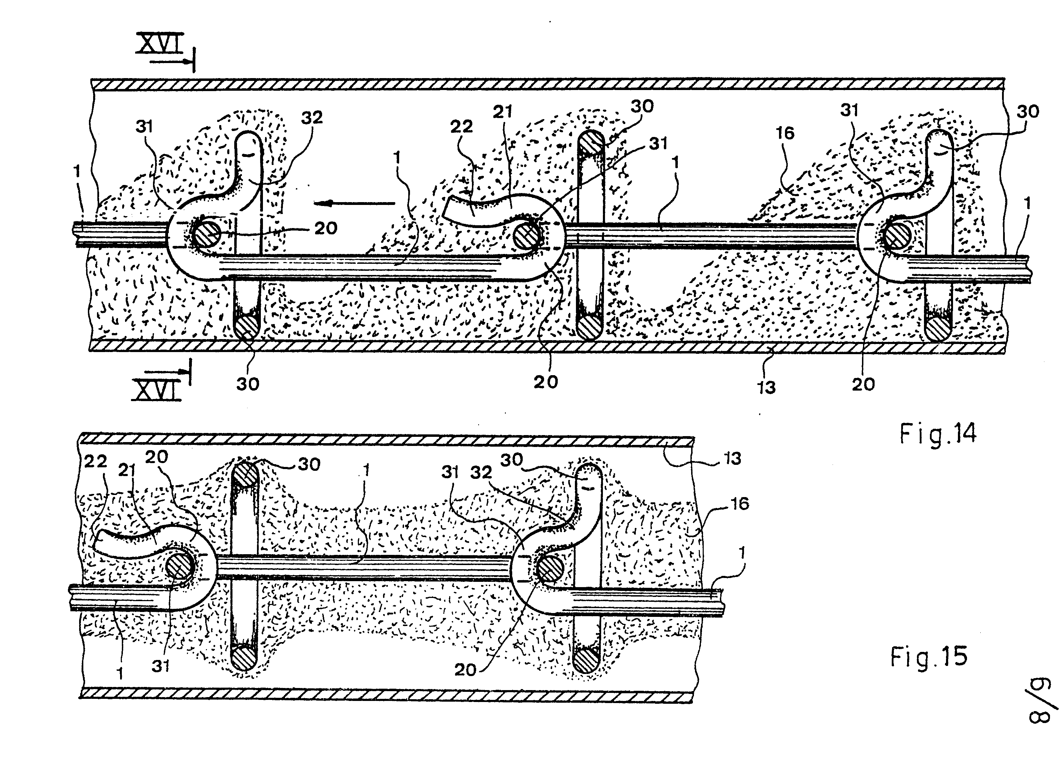

The invention resolves the above said technical problem by adopting a composable chain consisting of filiform metallic

elements of constant section and constant step, interconnected among each other by spacial joints with forced insertion of each element into the adjacent one; said filiform elements are formed by a longitudinal stem connected at one end by a component with one or more coils arranged in an inclined or perpendicular plane, compared to the stem, in such a way that they form the conveyor element of the material to be transported and/or the scraper element of the inner tube surface; it is foreseen that the conveyor element can be equipped with one circular coil only, at the inside of which a shutter diaphragm of plastic material is fixed in order to obtain a better entrainment of the material in case of conveyors for great rates of flow and with large diameter tubes. The connexion of the various chain elements is obtained by equipping the elements with coupling devices to the two adjacent elements, the coupling being made by slightly forced or snapping insertion of one element into the other. These coupling devices limit the reciprocal movements in axial direction of the chain elements and guarantee a relative rotation in the space of one element compared to the other adjacent one over angles that can reach values of even 90° and, moreover, connect the single elements one with the other. In the following, three ways of carrying out the invention are described: a first way, illustrated in Figures 1 to 9, in which the chain elements are equipped with coupling devices only at one end, whereas at the other end of the stem they are equipped with one or more coils of different shape, depending on whether the chain element has the function of conveying the material to be transported or of scraping the inner tube wall; a second way, illustrated in Figures 10 to 13, in which the chain elements are equipped with simple and efficient coupling devices at both ends and, at one end, only with a flat component of coils, which are the same for all chain elements. The third realization, illustrated in Figures 14 to 23 adopts a composable chain particularly suitable for conveyors with large diameter tubes for great rates of fow. The advantages obtained by this invention are: great simplicity of assembly and disassembly of the chain elements, especially with the second and third types of realization, which consent to make quick chain repairs on site without any need of intervention of skilled technicians; regular operation of the conveyor without crawling, as the chain elements scrape off the possible deposits that have come into existence on the walls of the conveyor tubes during their movement; estremely simple and sturdy construction, especially with reference to the second and, above all, to the third way of carrying out the invention; possibility of using the chain in tubes arranged in any requested way owing to the type of joint adopted between one chain element and the adjacent ones, especially in the second and third way of realization; possibility of using the chain also for conveyors with large diameter tubes for great rates of flow, constructing the chain according to the third method of realization of the invention.

The three ways of carrying out the invention are illustrated, just to give an example, in the eight enclosed design tables, in which:

Figure 1 is a side view of a chain element having a conveyor with close section, except at the centre, of the type with an outer diameter smaller than the inner diameter of the tube, according to the first way of carrying out the invention;

Figure 2 is a view from above of the initial length of the stem of the element of Figure 1;

Figure 3 is the right hand view of Figure 1;

Figure 4 is a side view of a chain element with a scraper with a beveled part at the front of the type with an outer diameter kept elastically adherent to the inner tube surface, also according to the first way of carrying out the invention;

Figure 5 is a view from above of the initial stem sector of the element of Figure 4;

Figure 6 is the right hand view of Figure 4;

Figure 7 is a partial longitudinal section of a conveyor tube length, straight-lined for simplicity reasons, equipped

with elements of the types of Figures 1 and 4;

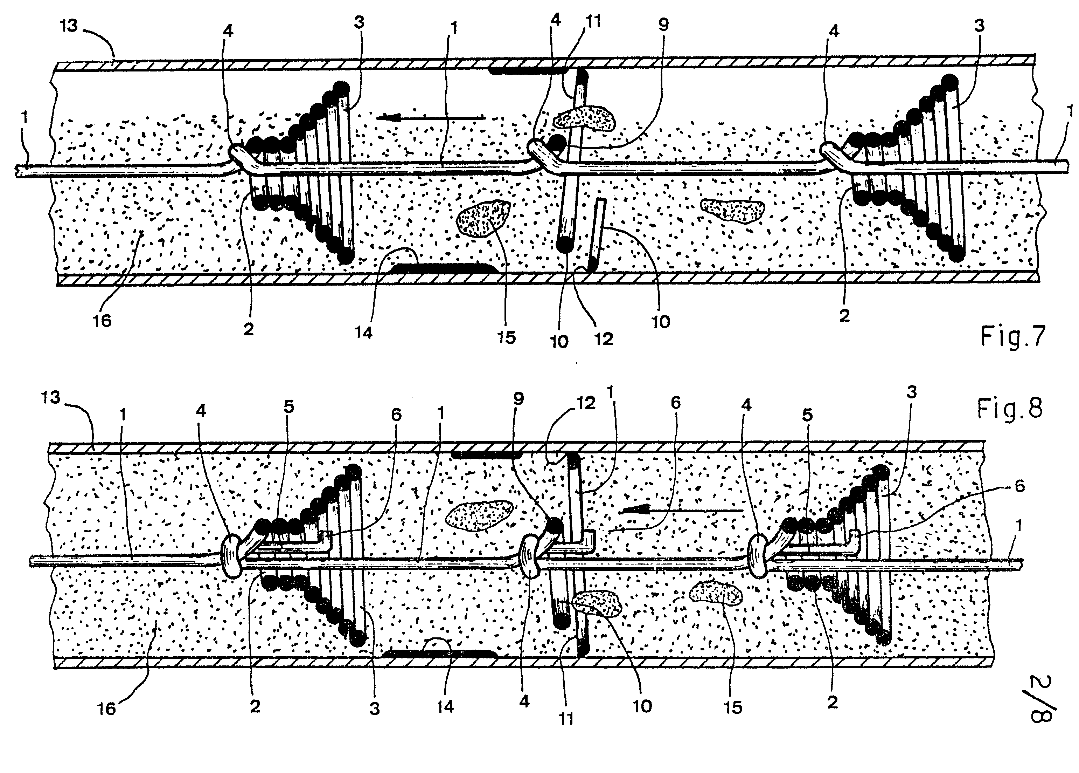

Figure 8 is a longitudinal section shifted 90° compared to Figure 7 in order to show the side bending of the coupling device between two elements, where this should be necessary;

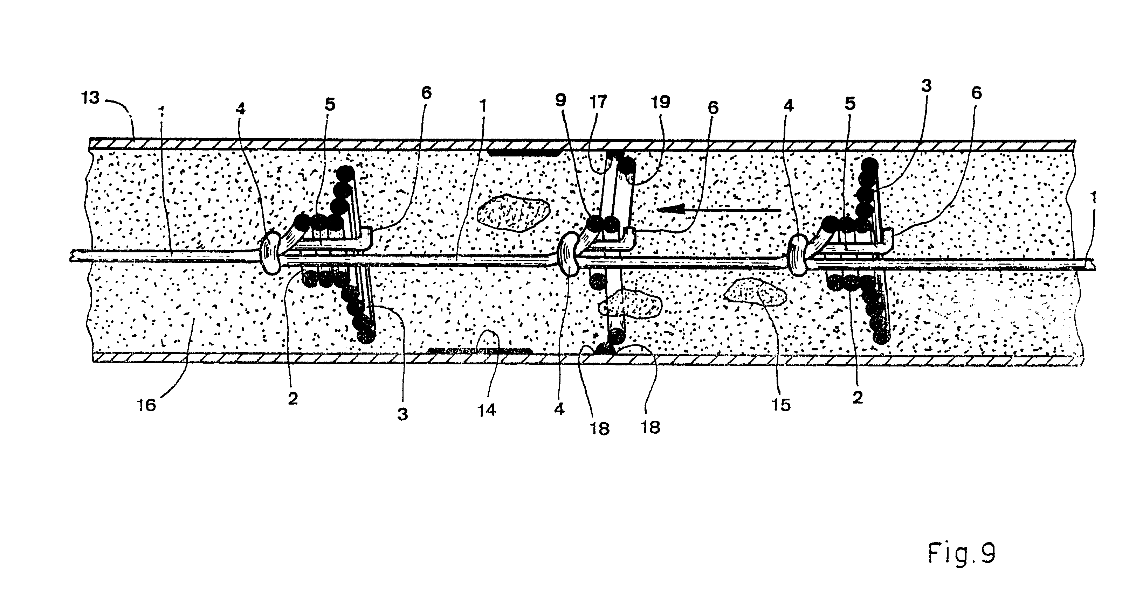

Figure 9 is a longitudinal section of a tube length like that of Figure 8, in which a type of scraper with beveled longitudinal section is reproduced;

Figure 10 is a side view of a composable chain element equipped with a crooked coupling device corresponding to the second way of carrying out the invention;

Figure 11 is a right hand view of Figure 10;

Figure 12 is a view from above, partially in section, of Figure 10;

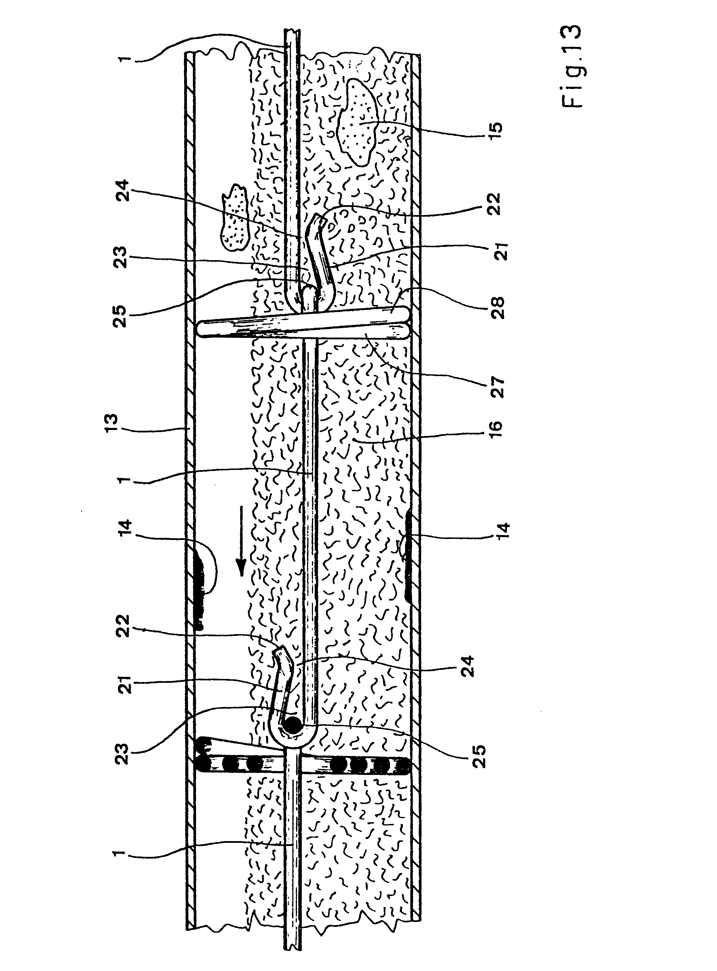

Figure 13 is a partial longitudinal section of the conveyor tube of Figure 10, in the case, in which the peripheral coil of the flat spiral of the conveyor element slides on the inner tube surface in order to obtain the scraping;

Figure 14 is the partial longitudinal section of a chain length consisting of elements with coil in one plane only, having a diameter inferior to that of the tube, particularly intended for coarse or moist materials, according to the third way of carrying out the invention;

Figure 15 is a longitudinal section like that of Figure 14, but rotated 90°;

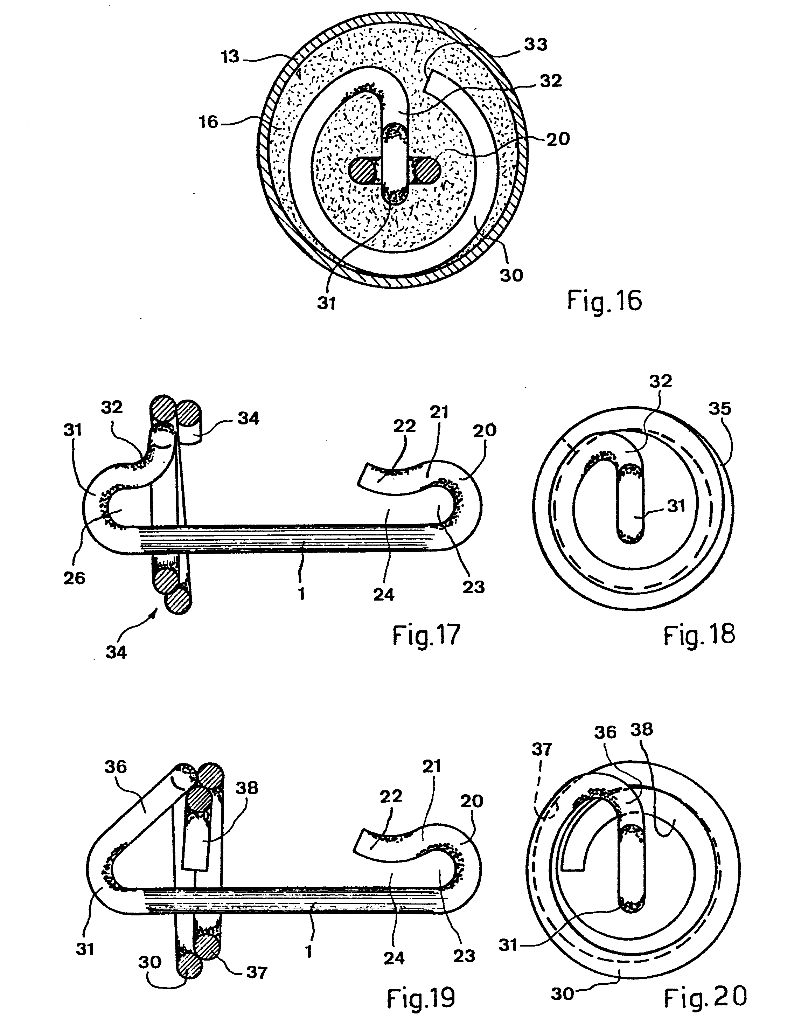

Figure 16 is the transversal section XVI-XVI of Figure 14;

Figure 17 is the side view of a chain element, having a conveyor with more than one coil, with progressive increase of the diameter up to roundness with rear disappearance of the end, particularly in order to reduce the void front area in those cases, in which gliding materials are to be conveyed or in case of tubes with considerable diameter;

Figure 18 is the left hand view of the element of Figure 17;

Figure 19 is a side view like that of Figure 17, again with a chain element having more than one coil in order to reduce the void front area, moreover, with progressive decrease of the diameter beginning from the outer circular coil and with re-entrance of the final sector;

Figure 20 is the left hand view of Figure 19;

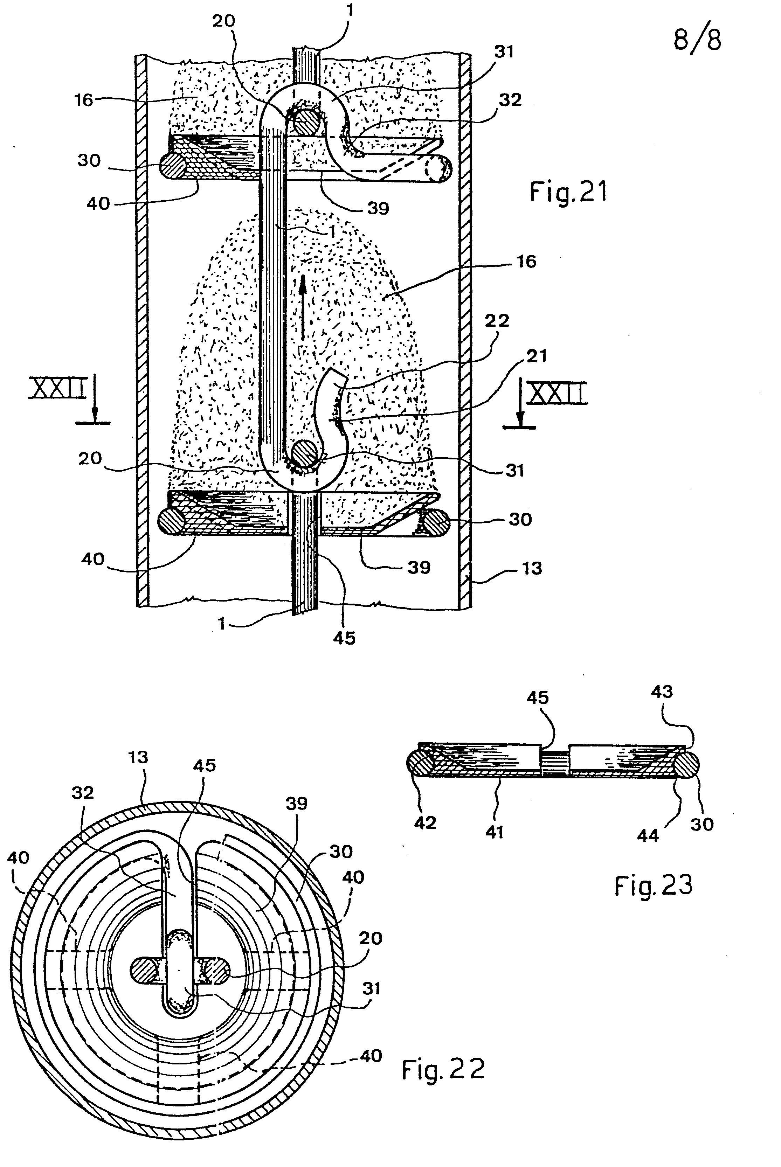

Figure 21 is the longitudinal section of a length of chain with circular coil formed by a turn in one plane only, equipped with a plastic shutter diaphragm fixed at single points, particularly in order to obtain a vertical entrainment without losses of the material conveyed within large diameter tubes, when it is necessary to avoid the use of metallic wire in order to keep the weight within certain limits;

Figure 22 is the section XXII-XXII of Figure 21;

Figure 23 is a detail of another plastic shutter diaphragm continuously fixed to the circular metallic coil.

The items are indicated as follows: 1 is the stem of a composable chain element, consisting of preferably stainless metallic wire wound in helical cylindrical stiffening coils 2 and, consecutively, in helical coil 3 so as to form a truncated cone of entrainment of the type having a major base with a diameter inferior to that of the conveyor tube in order to convey the animal feed without clogging and without stopping; 4 is an inverse and inclined bend length of the end of stem 1, immediately followed by an appendix 5 parallel to the stem itself, the end of which 6 can, if necessary, be bent sideways towards the outside like a catch after the insertion into the grommet 8, the opening of the latter being of lesser width than the stem 1 diameter; 9 indicates one or more cylindrical or spiral stiffening coils of a scraper element, followed by an elastic spiral 10 arranged according to the inclined or perpendicular plane 11: the section of the coil 10 being beveled in such a way as to present a peripheral front scraper edge 12 suitable to scrape the inner tube wall, against which it is lightly pushed by effect of the elastic material: the outer diameter of the last coil being such as to consent the edge 12 to remain elastically adherent to the inner wall of said tube; the scraper element can be inserted, for istance, between every five, ten or twenty entraining elements; 13 is the conveyor tube, in any case bent and oriented in the space; 14 indicates some deposits, 15 some conglomerates formed with the concurrence of moisture or fallen off the tube; 16 indicates the granular and/or powdered material to be transported; all the composable elements have the same length; 17 (Figure 9) is the scraping coil of a scraper element, beveled in such a way that it presents along its whole outline a peripheral front and rear scraping edge 18; 19 is a coil of a smaller diameter than that of coil 17, located behind the coil 17 in the sense of the movement and partially surmounting it; the coil 19 serving as a reinforcement of coil 17 against possible relaxation due to the action of scraping the inner tube wall; the coupling of one chain element to the previous one is obtained by introducing the end 4 through the central void of the coils, elastically approaching the catch to the stem 1 of the element in order to permit its passage through said void so that it will penetrate into the grommet 8; 20 (Figure 10) indicates an arch-shaped bend towards the rear of one end of the stem 1 of a chain element constructed according to the second way of carrying out the invention, so that it forms a crook surrounding the grommet 23 together with the following length 21, convergent towards the stem 1 and with the final length 22, divergent from said stem; 24 indicates a neck at the entrance of the grommet 23 with a width slightly smaller than that of the stem 1 diameter in order to consent the snap-coupling of the following chain elements; 25 indicates the stem 1 end opposite from the hook, bent to U-shape in the opposite sense and in a plane of 90° compared to the hook itself, forming the loop 26; 27 is a spiral contained in an orthogonal plane compared to the stem and having its origin at the end 25 bent to U-shape, the spiral ending with a fraction of coil 28 deviated from the plane of the coils 27 towards the side opposite to that of the grommet 23 and bent with a minor radius up to a point, where its free end 29 re-enters into the diameter of the outer circle of the spiral, practically coinciding with the inner one of tube 13, or slightly inferior to it
in order to avoid that the end itself scores the inner
surface of said tube; 30 (Figure 14) indicates a circular coil lying on a perpendicular plane compared to the
axis of stem 1, forming a rear and side extension of the
U-shaped bending 31, lying on the same plane as the stem
1 by means of the connexion length 32; 33 indicates the
free end of the coil 30 spaced from the connexion length
32 in order to avoid the formation of deposits; 34 is a
spiral with major development of a turn, the final length
35 of which is bent towards the rear out of the plane con-
taining one or more turns of the spiral in order to superimpose itself to the rear of the coil with greater dia-
meter without projecting peripherally from it and cooperat-
ing to form a circular peripheral outline; 36 indicates a
connexion length between the U-shaped bend 31 and the coil
30, followed by a length of re-entering rear coil 37 and
by a fraction of coil (or a whole coil or more than one
coil) like 38 lying at the inside of the coil 30, in the
same plane of it or in a plane comprised between the initial one of coil 37 and the plane of coil 30; 39 (Figure
21) is a concave plastic diaphragm equipped with projections 40 intended for fixing it to coil 30 peripherally
equipped with semicylindrical housing springer for the
snap-coupling with the inner surface of the coil 30; 41
(Figure 23) is an other type of concave shutter plastic
diaphragm snap-coupled with the coil 30, equipped with a
peripheral semi-cylindrical continuous housing springer
42 with peripheral edges respectively 43 and 44 forming
an anti-extraction grip on the coil itself; 45 indicates
a centre line notch of U-shape of the diaphragm 39 or 41
to consent the straddling insertion of the U-shaped bend
31 and of the joint 32.
In case of Figures 1 - 9 the operation is the following:
having pulled the stems 1 in the direction of the arrow
(Figures 7,8), the coils 3 carry the greater part of the
material to be conveyed, whereas part of it escapes between the most exterior coil 3 and the wall of the tube 13;

the peripheral edge 12 of the coil 10 of a scraper element glides with moderate elastic pressure on the inner wall of tube 13, thus eliminating the deposits 14 or preventing their forming; the detached deposits and possible agglomerates of material 15 pass through the coil 10 without slowing down the moving of the conveyor, even if they are big; the grommet 8 of the inclined bend 4 of the front end of stem 1, put on the connexion length between the stem and the first coil 2, 9 determines the position of coupling and the step of the chain elements during the transport in direction of the arrow, the extraction being prevented by the side catch 6, which consents an axial play and also the angular oscillation in the space of a chain element compared to the adjacent ones up to the limit consented by the position of the above said catch end and by its shifting, which must consent the elastic insertion of the end itself through the central void of the coils 2,9. As to the element of Figures 10, 11, 12, 13, the operation of scraping the inner tube 13 surface is made by the periphery of the extreme outer coil 27, 28, the end of which 29 is hidden by the backside of a length of the preceding coil; the snap coupling between two chain elements is brought about by forcing the U-shaped bend 25 through the neck 24 of the crook 21, 22 in such a way that the arch-shaped bend of stem 1 of an element couples with the bend 25 of the other element: in this situation the bend 25 is inserted with a clearance in the grommet 23; it is to be noted that the axial play between two consecutive chain elements in both senses is limited by the neck 24 at the opening of the grommet 23 and that the articulation angle in the space is only limited - with equal rear projection of the U-shaped bend 25 - by the leaning of the last coil 28, against which stem 1 comes to rest in case of an elbow bending of the tube 13; the articulation angle can therefore reach the value of 90°. Finally, in case of Figures 16 to 23, there is a greater resistance and elasticity in longitudinal direction besides obtaining the scraping and coupling conditions foreseen in the previous cases, because

of the effect of the coplanarity of the crook 20, 21, 22 with the U-shaped bend 31, thus obtaining the possibility of overcoming possible crawling with damage and without intervention of the calibrated safety device, which interrupts the chain pull as soon as the extension exceeds a pre-established value; moreover, the adoption of a circular coil 30 in one turn only with connexion 32 in the plane of the U-shaped bending 31 consents to introduce into its inside an extractable concave shutter diaphragm 39, 41 with U-shaped notch to improve the entrainment of the material without increasing the use of heavy metallic wire to fill the inner area of said coil, the effect of the concave shutter diaphragm being such as to cooperate in the entrainment of the material, limiting also its peripheral scattering; it is to be noted that the peripheral edges of the diaphragm are reinforced, on the motion side, in order to permit its stable rotation, when its bottom bends because of the resistance of the material.

In the practical realization the material, the dimensions, and the execution details can be different from those indicated, but should be technically equivalent, without leaving the juridical dominion of this invention.

CLAIMS

1. Composable chain for conveyors of granular and/or powdered materials, especially animal feed, pulled in a gliding way at the inside of a straight or not straight tube, in any case oriented in the space, with or without slack, characterized by the fact that it is formed by interchangeable filiform metallic elements with constant step, interconnected among each other with spacial joint, with forced insertion of each element into the adjacent one; said filiform elements consisting of a longitudinal stem (1), connected at one end with a component of one or more coils in such a way that they form the conveyor element of the material to be transported and/or the scraper element of the inner surface of the tube; said filiform elements being equipped with the stem (1) at one or both ends, with devices for coupling them to the adjacent chain elements.

2. Composable chain according to claim 1, characterized by the fact that the stem (1) of a conveyor element at one end is connected with one or more cylindrical coils (2) and/or a stiffening spiral with a sufficient inner diameter to guarantee an articulation in the coupling with the adjacent chain element, followed by one or more coils (3), locked or not among each other and arranged on a truncated cone surface up to reaching a max. outer diameter, which is smaller than or equal to the inner tube diameter.

3. Composable chain according to claim 1, characterized by the fact that the stem (1) of a scraper element is at one end connected with one or more cylindrical coils (9) and/or with a stiffening spiral, followed by an elastic coil (10) in an inclined or orthogonal plane compared to the stem (1), the section of said coil (10) being beveled at its front part in such a way as to present a peripheral scraping edge ( 12).

4. Composable chain according to claim 1, characterized by the fact that the stem (1) of a scraper element is connected with one or more cylindrical coils (9) and/or a stiffening spiral, followed by a coil (19) of a slightly smaller diameter than the inner diameter of the conveyor tube sur mounted by a last coil (17) with greater diameter than coil (19) at the front in the sense of the movement; the section of coil (17) being beveled longitudinally to present a double peripheral edge (18); it is foreseen that the coil (19) forms the rear reinforcement of the coil (17).

5. Composable chain according to claim 1, characterized by the fact that each conveyor and/or scraper element is equipped with a coupling device at the end of the stem opposite to that connected with the coils (2) or with the coils (9), this coupling device being formed by a bend (4) of the stem (1) shaped like an arch towards the back, forming a grommet (8) of greater dimensions than the stem (1) diameter; the bend (4) terminating with a straight-lined parallel length (5) at a distance from the stem slightly inferior to the stem diameter; the grommet (8) lying in an inclined plane compared to the plane containing the stem (1) and the straight-lined parallel length (5) following the bend (4) so as to form the axial catch against the connexions of the coils (2) or (9) in the coupling with the adjacent chain element.

6. Composable chain according to claims 1, 5, characterized by the fact that the straight-lined parallel length (5) following the bend (4) of the stem (1) is equipped with a sideways bent end so as to form the axial catch, in the opposite sense of the previous one, against the coils (2,3) or against the coils (9) of the adjacent chain element.

7. Composable chain according to claim 1, characterized by the fact that in each element one end of the stem (1) is equipped with a bend (20) shaped like an arch towards the back, followed by two lengths (21,22) respectively converging towards the stem (1) and diverging from it; the bend (20) and the converging and diverging length (21,21) forming a crook arranged in a plane containing the stem (1); the bend (20) and the converging length (21) delimiting a grommet (23) with bigger dimensions than the stem (1) diameter, the opening of which presents a neck (24) of slightly smaller width than the diameter of said stem.

8. Composable chain according to claims 1, 7 characterized by the fact that the end of the stem (1) opposite from the one bent to crook shape is equipped with a U-shaped bend (25) so as to form a loop (26) for the snap-insertion with elastic force into the grommet (23) of the adjacent chain element; said U-shaped bend (25) being connected with a flat spiral lying in an orthogonal plane compared to the stem (1), equipped with one or more coils (27) forming a conveyor and/or scraper element.

9. Composable chain according to claims 1,7,8, characterized by the fact that the play in axial direction between two adjacent chain elements coupled together is limited by the neck (24) of the grommet (23).

10. Composable chain according to claims 1, 7, 8, characterized by the fact that the U-shaped bend (25) of the stem (1) projects from the plane of the coils (27) by a sufficient quantity to consent the reaching of the value of 90° of the articulation angle between two adjacent chain elements.

11. Composable chain according to claims 1, 8, characterized by the fact that the wire of the last fraction of turn (28) of the spiral formed by the coils (27) is deviated from the spiral path towards the inside in order to surmount the last sector of the preceding coil at the rear and to lean on it, thus determining a nearly circular outline of the spiral periphery.

12. Composable chain according to claims 1, 7, 8, characterized by the fact that the crook (20, 21, 22) and the loop (26) formed by the U-shaped bend (25) of the stem (1) lie on planes, which are orthogonal among each other.

13. Composable chain according to claims 1, 7, characterized by the fact that the stem (1) end opposite from the one bent to crook shape presents a U-shaped bend (31) connected with a circular coil (30) by means of a connexion sector (32), which initially rises into the plane of the above said bend and is then deviated sideways to begin forming the coil (30).

14. Composable chain according to claims 1, 7, 13, characterized by the fact that the crook (20, 21, 22) and the bend (31) of U-shape of the stem (1) lie on the same plane.

15. Composable chain according to claims 1, 13, 14, characterized by the fact that the circular coil (30) is followed by a length of disappearing coil (37) and by a fraction of coil or a coil or more than one coil (38) lying at the inside of the circular coil (30) in order to diminish or close its inner area.

16. Composable chain according to claims 1, 16, characterized by the fact that the inner area of the circular coil (30) is closed by a shutter diaphragm (39, 41) consisting of a concave surface in the sense of the motion equipped with a centre-line U-shaped notch (45).

17. Composable chain according to claims 1, 16, characterized by the fact that the shutter diaphragm (39) is equipped with fixing projections (40) peripherally equipped with semi-cylindrical housing springer for the snap-coupling with the inner surface of the circular coil (30): the edge of said closing device, which precedes in the sense of the motion, being more pronounced than the opposite one.

18. Composable chain according to claims 1, 16, characterized by the fact that the shutter diaphragm (41) is equipped with peripheral edges (43, 44) delimitating the semi-cylindrical housing springer (42) for the snap-coupling with the inner surface of the circular coil (30): the edge of said closing device, which precedes in the sense of the motion, being more pronounced than the following edge.

Fig.1

Fig. 4

Fig.2

Fig.5

Fig.3

Fig.6

Fig.7

Fig.8

Fig.9

Fig.10

Fig.12

Fig.11

Fig.13

Fig.14

Fig.15

0005498

7/8

Fig.16

Fig.17

Fig.18

Fig.19

Fig.20

Fig.21

Fig.22

Fig.23

0005498

European Patent
Office

Application number

**EUROPEAN SEARCH REPORT**

EP 79 101 390.7

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>US - A - 3 822 779</u> (McAULEY)<br><br>* complete document *<br><br>-- | 1,5,7,<br>8,10,<br>12,13 | B 65 G 19/20 |
| | <u>US - A - 3 239 056</u> (CORDIS)<br><br>* column 1, lines 11 to 63 *<br><br>---- | 1 | |

TECHNICAL FIELDS
SEARCHED (Int.Cl.³)

A 01 K  5/00
B 65 G 19/00

CATEGORY OF
CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
family,
corresponding document

| X | The present search report has been drawn up for all claims | | |
|---|---|---|---|
| Place of search<br>Berlin | Date of completion of the search<br>17-07-1979 | Examiner<br>SIMON | |

EPO Form 1503.1  06.78